# EUROPEAN PATENT APPLICATION

(11) **EP 2 778 601 A1**
(43) Date of publication of application: **17.09.2014**
(21) Application number: 14159345.9
(22) Date of filing: 13.03.2014
(51) Int. Cl.: G01B 11/02, G01B 11/06, G01B 11/25

(54) **Optical metrology by light beam analysis**

(30) Priority: 15.03.2013 US 201361789599 P
(71) Applicant: Siemens Healthcare Diagnostics Inc., Tarrytown, NY 10591-5098 (US)
(72) Inventor: Profitt, James A., Palmer Lake, 80133 (US)
(74) Representative: Maier, Daniel Oliver

(57) **Abstract**

Methods and systems are disclosed including a first light source producing a first light beam and a second light source producing a second light beam into a detection area; the first light beam overlapping the second light beam at a predetermined distance above the inspection base; at least one image processing system comprising one or more light detectors adapted to remotely sense the first and second light beam and generate one or more output signals indicative of one or more patterns produced on a top of an object by the first and second light beam; and one or more processors running computer executable instructions that when executed by the processor causes the image processing system to receive the output signal and determine height of the object by analyzing location of the first light beam relative to the second light beam in the one or more pattern.

## Description

### FIELD OF THE DISCLOSURE

The disclosure generally relates to optical metrology systems and methods for measuring height of an object. More particularly the disclosure relates to producing multiple light beams into a detection area, which are detected by an image processing system which determines height of an object within the detection area based on the location and/or appearance of the light beams.

### BACKGROUND

Vernier acuity is the aspect of visual acuity that involves the ability to detect the alignment or lack of alignment of the two parts of a broken line, for example, as in reading a vernier scale. A vernier scale is an additional scale which allows a distance or angle measurement to be read more precisely than directly reading a uniformly-divided straight or circular measurement scale. One example of use of a vernier scale is vernier calipers used in metrology.

Humans have relatively good vernier acuity and so are able to determine alignment of two parts of a broken line, such as in reading vernier scales. Additionally, machine vision systems and other metrology systems can have vernier acuity type ability to detect the alignment or lack of alignment of broken lines as well as the ability to detect patterns and compare detected patterns to a desired pattern. Examples of machine vision systems include the Cognex Vision System and the Keyence Vision System. However, machine vision systems measure two-dimensionally, width and length, but not height.

Further, currently systems exist which use light to measure objects. However, current systems are difficult to read and are ambiguous as to where distance should be measured. Additionally, the systems are not sensitive to small displacements. The systems commonly have limited available range for measurement, such as limiting measurement to one direction, decreasing the precision of the measurement. An optical measurement system is needed in which it is visually apparent as to whether an object is above or below an optimal thickness or height and which allows for precision measurement of an object.

### SUMMARY

A method and system are disclosed. The problem of measuring height and/or thickness of an object using optical metrology is addressed through producing multiple light beams into a detection area, which are detected by an image processing system which determines height/thickness of an object within the detection area based on the location and/or appearance of the light beams and/or light beam pattern(s).

### BRIEF DESCRIPTION OF THE DRAWINGS

The accompanying drawings, which are incorporated in and constitute a part of this specification, illustrate one or more implementations described herein and, together with the description, explain these implementations. The drawings are not necessarily to scale. For purposes of clarity, the drawings may depict certain aspects of the invention that are not normally visible to the naked eye, for example, depictions of light beams projected through air. In the drawings:
FIG. 1a is a schematic diagram of a front view of a portion of an exemplary measurement system in accordance with the present disclosure, and depicting light beams as visible.
FIG. 1b is a schematic diagram of a side view of the exemplary measurement system of FIG. 1 a.
FIG. 2a is a schematic diagram of an image captured by the exemplary measurement system of FIGS. 1a-1b of an object having a desired height.
FIG. 2b is a schematic diagram of an image captured by the exemplary measurement system of FIGS. 1a-1b of an object having more than the desired height.
FIG. 2c is a schematic diagram of an image captured by the exemplary measurement system of FIGS. 1a-1b of an object having less than the desired height.
FIG. 3a is a schematic diagram of another image captured by the exemplary measurement system of FIGS. 1a-1b of an object having a desired height.
FIG. 3b is a schematic diagram of another image captured by the exemplary measurement system of FIGS. 1a-1b of an object having more than the desired height.
FIG. 3c is a schematic diagram of another image captured by the exemplary measurement system of FIGS. 1a-1b on an object having less than the desired height.
FIG. 4a is a schematic diagram of a side view of an exemplary measurement system with light curtains with second light beams in a fan-like pattern and depicting the light beams as visible.
FIG. 4b is a front view of the system of FIG. 4a and depicting the light beams as visible.
FIG. 5a is a schematic diagram of an image captured by the exemplary measurement system of FIGS. 4a-4b of an object having a desired height.
FIG. 5b is a schematic diagram of another image captured by the exemplary measurement system of FIGS. 4a-4b of an object having a desired height but in which first light beams are projected to partially overlap the object.
FIG. 5c is a schematic diagram of an image captured by the exemplary measurement system of FIGS. 4a-4b of an object having more than the desired height.
FIG. 5d is a schematic diagram of an image captured by the exemplary measurement system of FIGS. 4a-4b of an object having less than the desired height.
FIG. 6a is a schematic diagram of a side view of an exemplary measurement system with light curtains and second light beams parallel to one another and depicting the light beams as visible.
FIG. 6b is a schematic diagram of a side view of the exemplary measurement system of FIG. 6a, the second light beams having greater angle difference than in FIG. 6a and depicting the light beams as visible.
FIG. 7a is a schematic diagram of an image captured by the exemplary measurement system of FIG. 6a of an object having a desired height.
FIG. 7b is a schematic diagram of an image captured by the exemplary measurement system of FIG. 6a of an object having more than the desired height.
FIG. 7c is a schematic diagram of an image captured by the exemplary measurement system of FIG. 6a of an object having less than the desired height.
FIG. 8a is a schematic diagram of a perspective view of a portion of an exemplary measurement system in accordance with the present disclosure with light beams aimed to cross, depicting the light beams as visible, with an object having a desired height.
FIG. 8b is a top view of the system of FIG. 8a and depicting the light beams as visible.
FIG. 9a is a schematic diagram of a perspective view of the exemplary measurement system of FIG. 8a, with an object having more than the desired height and depicting the light beams as visible.
FIG. 9b is a top view of the system of FIG. 9a and depicting the light beams as visible.
FIG. 10a is a schematic diagram of a perspective view of the exemplary measurement system of FIG. 8a, with an object having less than the desired height and depicting the light beams as visible.
FIG. 10b is a top view of the system of FIG. 10a and depicting the light beams as visible.

### DETAILED DESCRIPTION

The following detailed description refers to the accompanying drawings. The same reference numbers in different drawings may identify the same or similar elements.

The mechanisms proposed in this disclosure circumvent the problems described above. The present disclosure describes a system for optical metrology through light analysis. An exemplary embodiment produces multiple light beams that are independently distinguishable into a detection area. The light beams are detected by an image processing system which determines height and/or thickness of an object within the detection area based on the location and/or appearance of the light beams and/or light beam patterns. In an automated system, this can allow for automated corrections so that the target is moved to the correct height and/or the system is adjusted to correct the target thickness; and for inspection systems, this can allow for selection between too thick, too thin, and just right objects.

In one embodiment, a system includes an inspection base, a first light source producing a first light beam into a detection area, and a second light source spaced a distance from the first light source and producing a second light beam into the detection area. The first light beam may overlap the second light beam at a predetermined distance above the inspection base. The first light beam is distinguishable from the second light beam. The system also includes at least one light source controller controlling the first light source and the second light source as well as at least one image processing system. The image processing system may include one or more light detector, such as one or more camera, adapted to remotely sense the first light beam and the second light beam to generate an output signal indicative of one or more patterns produced on a top of an object by the first light beam and the second light beam. The image processing system may also include one or more processor running computer executable instructions that when executed by the one or more processor cause the one or more processor to receive the output signal and determine height of the top of the object by analyzing a location of the first light beam relative to the second light beam in the one or more pattern.

In one embodiment, a system includes a first light source producing a first light curtain into a detection area and a second light source spaced a distance from the first light source producing a second light curtain into the detection area. The first light curtain may comprise a plurality of spaced apart first light beams and the second light curtain may comprise a plurality of spaced apart second light beams. At least one first light beam may align with at least one second light beam at a predetermined distance from the first light source and the second light source. The first light beam is distinguishable from the second light beam. The system also includes at least one light source controller controlling the first light source and the second light source and at least one image processing system. The image processing system may include one or more light detector, such as one or more camera, adapted to remotely sense at least one first light beam and at least one second light beam and generate an output signal indicative of one or more patterns produced by at least one first light beam and at least one second light beam, at least one light beam aimed at least in part to a top of an object. The image processing system may also include one or more processor running computer executable instructions that when executed by the one or more processor cause the one or more processor to receive the output signal and determine height of the top of the object by analyzing a location of at least one first light beam relative to at least one second light beam in the one or more pattern.

### DESCRIPTION

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of the inventive concept. This description should be read to include one or more and the singular also includes the plural unless it is obvious that it is meant otherwise.

Further, use of the term "plurality" is meant to convey "more than one" unless expressly stated to the contrary.

Finally, as used herein any reference to "one embodiment" or "an embodiment" means that a particular element, feature, structure, or characteristic described in connection with the embodiment is included in at least one embodiment. The appearances of the phrase "in one embodiment" in various places in the specification are not necessarily all referring to the same embodiment.

Software includes one or more computer executable instructions that when executed by one or more component cause the component to perform a specified function. It should be understood that algorithms described herein are stored on one or more non-transient memory. Exemplary non-transient memory includes random access memory, read only memory, flash memory or the like. Such non-transient memory can be electrically based or optically based.

Use of the term "color" in conjunction with discussion of light may refer to any part the spectrum of light wavelengths, visible or invisible to the human eye. Nonexclusive examples of visible light include red, blue, and green light. Nonexclusive examples of light invisible to the human eye include ultraviolet (UV) and infra-red (IR) light.

As discussed above, current systems that use light to measure objects are difficult to read, ambiguous, not precise, and insensitive to small displacements. The present disclosure addresses these deficiencies with a methodology and system for measuring height/thickness of an object by analyzing location and/or appearance of light beams and/or light beam pattern(s). In one embodiment, the system allows measurement of thickness/height (z axis) of objects using two dimensional (x and y axes) camera inspection optical measurement systems (a.k.a. "machine vision" systems). In one embodiment, a measurement system can determine height of an object in a detection area based, at least in part, on the location of one or more light beams or one or more points in light beams.

The angles and positions of light beams can be determined such that one or more light beams appear as a solid pattern, such as a single line or a dot on a surface of an object at a predetermined desired height of the object. Multiple beams of light that are individually distinguishable can be projected onto and/or near the object to appear as a solid pattern, for example, when viewed from above when the object is at the desired height or a predetermined distance. However, if the height of the object is different from the predetermined desired height of the object, the pattern will appear to have different regions which may be referred to herein as displaced regions, and/or offset regions. Likewise, as a linear light beam is projected across a surface or surfaces of multiple heights, the light beam, observed from a viewpoint above the surface, may appear to be "broken" with an offset in the line of light at the change in height of the surface.

The greater the difference in height(s) of the object relative to the predetermined desired height, the greater the perceived regions or offset of the light. The perception of a pattern with different regions or offset regions can be utilized to determine height variances in the object relative to the predetermined desired height.

Determination of height/thickness of the object may allow for automated corrections in height/thickness, and/or may allow for use in inspection systems for selection between objects of a desired height/thickness and objects below/above desired height/thickness. Recognition of the directional position of the light beams can allow compensation of the height of the object. For example, for an object moving through the measurement system, a process controlling thickness of the object could be modified to change the thickness based on the directional position of the light beams. Examples of processes that could control thickness of an object include pressure rollers, milling machines, planers, or slits in extruders, and so on.

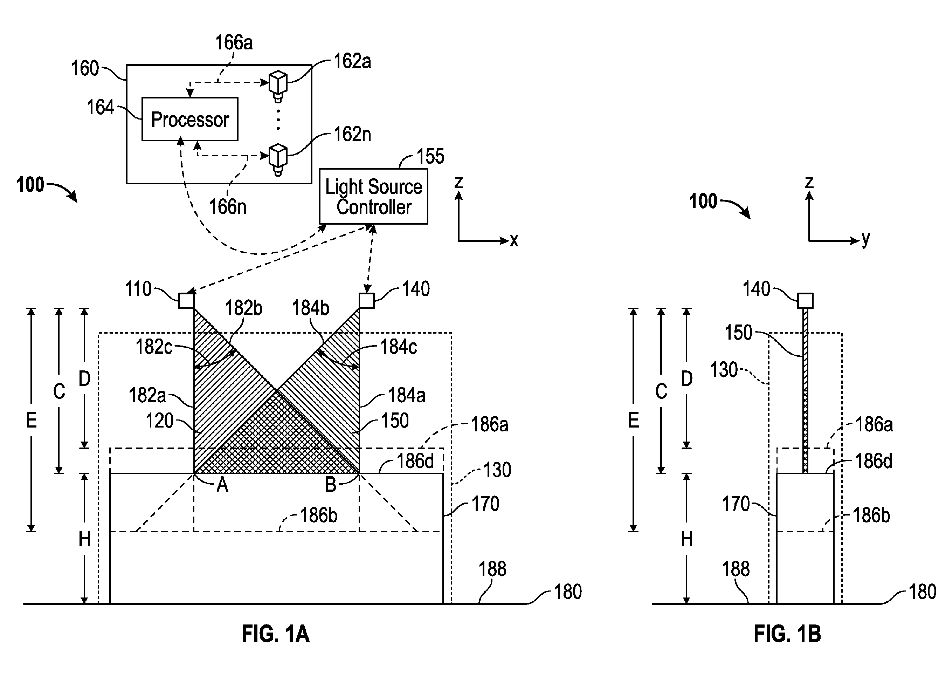

Referring now to the drawings, FIG. 1a depicts a schematic diagram of a front view of a portion of an exemplary measurement system 100 in accordance with the present disclosure. FIG. 1b depicts a schematic diagram of a side view of the exemplary measurement system 100 of FIG. 1a. The exemplary measurement system 100 comprises a first light source 110 producing a first light beam 120 into a detection area 130, a second light source 140 producing a second light beam 150 into the detection area 130, at least one light source controller 155, and at least one image processing system 160. The image processing system 160 may be located anywhere in the measurement system 100 such that the image processing system 160 can detect the first light beam 120 and second light beam 150. The image processing system 160 will be described in more detail below, but generally comprises one or more light detectors 162a - 162n, such as imaging cameras, and one or more processors 164.

The first light source 110 and second light source 140 may be any appropriate light source capable of producing a beam of light (referred to as the "light beam") that is distinguishable by the image processing system 160. The second light source 140 may be spaced a distance from the first light source 110. Examples of light sources 110, 140 include lasers, light emitting diodes (LEDs), and LED pattern projectors. LED pattern projectors are capable of producing fine light beams, without twinkle effects. Lasers, LEDs, and LED pattern projectors may produce different colors of light and/or be configurable with unique patterns of light. Of course, it should be understood that more than one light source may be used to produce a light beam.

The first light beam 120 may be formed by a projection of light from the first light source 110. The second light beam 150 may be formed by a projection of light from the second light source 140. The first and second light beams 120 and 150 may have the same cross-sectional shape, such as a line or a dot. Additionally, or alternately, a pattern-maker or mask (not shown) may be used between the light source(s) 110, 140, and the detection area 130 to form the light beam(s) 120, 150 into a predetermined cross-sectional shape, such as a line or a dot. Of course, it should be understood that more than two light beams may be used.

The first light beam 120 may be unambiguously distinguishable from the second light beam 150 such that the first light beam 120 can be differentiated from the second light beam 150. The first light beam 120 and the second light beam 150 may have visually apparent differences. Some examples of visually apparent differences are different colors/wavelengths, different light sub-patterns, and/or different time sequence for the appearance of the light beams 120, 150. The first and second light beams 120, 150 may be any color/wavelength so long as the first and second light beams 120 and 150 are discernible by the image processing system 160 on an object 170 whose height is to be determined by the image processing system 160. The first and second light beams 120, 150 may have one or more distinguishable light sub-pattern, for example, a series of dashes of light, areas of the light beam 120, 150 that are brighter than other areas, or areas of the light beam 120, 150 that are darkened or missing. The first light beam 120 may be produced at a first time and the second light beam 150 may be produced at a second time, creating a discernible difference between the first light beam 120 and the second light beam 150. The first light beam 120 may be the same size as the second light beam 150 or a different size than the second light beam 150 at a predetermined distance.

The detection area 130 is generally an area into which the object 170 may be placed or passed through, for example, for measurement. The detection area 130 may be any size. The measurement system 100 may include an inspection base 180, such as a block, within the detection area 130 upon which the object 170 may be placed or passed for inspection. The detection area 130 may encompass a portion of a manufacturing process line, for example, a portion of a conveyor or manufacturing station. In this case, the inspection base 180 can be a part of the conveyor or the manufacturing station.

The first light source 110 and second light source 140 may produce the first light beam 120 and second light beam 150 in such a manner that the first light beam 120 and the second light beam 150 collinearly overlap or collinearly align a predetermined amount at a predetermined distance above the inspection base 180. The predetermined distance may be at a desired height H of the object 170 in the detection area 130 from the inspection base 180, and may be measured or represented as a predetermined distance C from the first and second light sources 110, 140, where the sum of the desired height H and the predetermined distance C is a distance from the first and second light sources 110 and 140 to the inspection base 180.

In FIGS. 1a-1b, the object 170 in the detection area 130 is within the light beams 120, 150 projected by the light sources 110, 140. The object 170 may intersect the light produced by the first and second light sources 110, 140 at predetermined distance C, or at a distance D less than predetermined distance C, or a distance E greater than predetermined distance C. The measurement system 100 can measure these variances in the height of the object 170.

The light sources 110, 140 may be aligned such that the light sources 110, 140 produce the first and second light beams 120, 150 to intersect a top 186 of the object 170 in a manner to produce a predetermined pattern of light with known locations for points of the light beams 120, 150, when the object 170 is at the desired height H, as well as the predetermined distance C from the light sources 110 and 140. If the object 170 is not at the desired height H, then the area of intersection of the top 186 of the object 170 and the light beams 120, 150 changes, such that the pattern of light changes from the predetermined pattern, i.e. the light beams 120, 150 on the top 186 of the object 170 may be displaced partially or wholly and/or a different size or shape, forming a different pattern. For purpose of clarity, the top 186 of the object 170 will be differentiated by object 170 height as top 186d, top 186a, and top 186b, for when the object 170 top 186 is at the desired height H, is above the desired height H, or is below the desired height H, respectively.

Because the first light beam 120 can be distinguished from the second light beam 150, the change of the light beams 120, 150 may be easily apparent. The visually distinguishable change to the pattern of the first and second light beams 120, 150 can allow for visual determination as to whether the object 170 in the detection area 130 is at, below, or above the desired height H. For example, the amount and direction of change to the pattern of the first light beam 120 and second light beam 150 can be used to determine if the object 170 height is greater or less than the desired height H. It should be understood that a visual determination of object 170 height based on the pattern of the first and second light beams 120,150 may be carried out by an operator or by an apparatus.

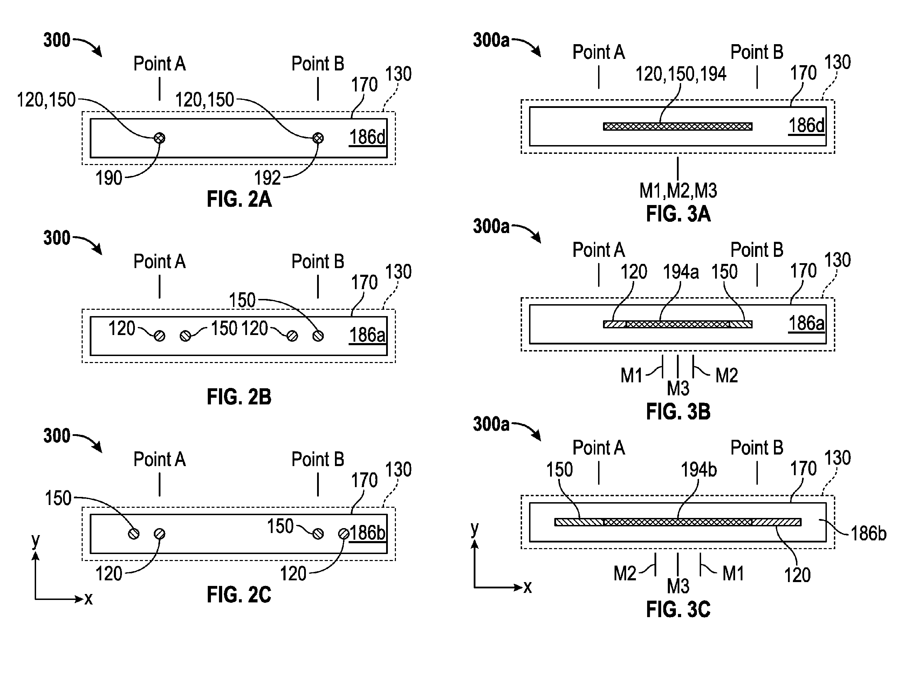

For example, FIGS. 2a-2c depict an image 300 of the light beams 120 and 150 on the top 186 of the object 170 in the detection area 130 from above. In FIGS. 2a-2c, the light beams 120, 150 have a cross-sectional shape that appears as circular dots in the image 300a, based on the intersection of the first and second light beams 120, 150 and the top 186 of the object 170. As shown in FIG. 1a, the light beam 120 has a first side 182a and a second side 182b. The first light beam 120 may also include a divergence angle 182c causing a changing distance from the first side 182a to the second side 182b as the first light beam 120 projects away from the first light source 110 along the "x" axis. In a similar manner, the light beam 150 has a first side 184a and a second side 184b. The second light beam 150 may also include a divergence angle 184c causing a changing distance from the first side 184a to the second side 184b as the second light beam 150 projects away from the second light source 140 along the "x" axis.

In the example shown in Fig. 1a, the first sides 182a and 184a are directed normal to the top 186 of the object 170, as well as a top surface 188 of the inspection base 180. However, the second sides 182b, and 184b diverge from normal to the top 186 of the object 170, as well as the top surface 188 at the divergence angles 182c and 184c.

In the exemplary system represented in FIGS. 2a-2c, the light beams 120, 150 have cross-sectional shapes that appear as two or more dots in the image 300, based on the intersection of the light beams 120, 150 and the top 186 of the object 170. FIG. 2a illustrates the image 300 when the object 170 is at the desired height H (that is, at predetermined distance C). In this case, the first and second light sources 110, 140 are aligned such that the first side 182a of the first light beam 120 and the second side 184b of the second light beam 150 overlap to produce a first dot 190 of light when the top 186d of the object 170 is at the desired height H (at predetermined distance C); and the second side 182b of the first light beam 120 and the first side 184a of the second light beam 150 overlap to produce a second dot 192 of light when the top 186d of the object 170 is at the desired height H (at predetermined distance C). If the first light beam 120 is a first color and the second light beam 150 is a second color the portion of the pattern where the light beams 120, 150 overlap each other may appear to be a third color, which is a combination of the first and second colors. Likewise, if the first light beam 120 has a first light sub-pattern and the second light beam 150 has a second light sub-pattern, the portion of the pattern where the light beams 120, 150 overlap each other may appear to have a third light sub-pattern, which is a combination of the first and second light sub-patterns. In the example shown in FIG. 2A where the first light source 110 is designed to produce a pattern of dots along the first and second sides 182a and 182b; and the second light source 140 is designed to produce a pattern of dots along the first and second sides 184a and 184b, the overlap of the first and second light beams 120,150 produce the first and second dots 190 and 192.

At distances other than predetermined distance C (i.e. when the object 170 is at heights other than the desired height H), the pattern of the first and/or second light beams 120, 150 may appear to be different than when the height of the object 170 is at the desired height H (predetermined distance C).

For example, FIG. 2b illustrates the image 300 when the object 170 has a height that is greater than the desired height H, for example, when the top 186a is positioned at a distance D, as shown by way of dashed lines in FIG. 1 a. In this case, the first light beam 120 and the second light beam 150 do not overlap or even partially overlap. Rather, the first light beam's 120 first and second sides 182a, 182b produce an image of two dots of light, at least one of which is shifted laterally along the x-axis to the left, relative to the location of the dot 192 of light when the object 170 is at the desired height H (predetermined distance C). The second light beam 150 first and second sides 184a, 184b also produce an image of two dots of light, at least one of which is shifted to the right along the x-axis, relative to the location of the dot 190 of light when the object 170 is at the desired height H (predetermined distance C). In the illustrated example, the dots produced by the second sides 182b and 184b of the first and second light beams 120, 150 are shifted because the angles 182c, 184c of the second sides 182b, 184b diverge from normal to the top 186 of the object 170. The size and/or shape of the image of the dots of light may also appear to be different than when the object 170 has a height that is other than the desired height H.

FIG. 2c illustrates the image 300 when the object 170 has a height that is less than the desired height H, for example, when the top 186b is at the distance E, as shown by way of dashed lines in FIG. 1 a. Again, in this case, the first light beam 120 and the second light beam 150 do not overlap. Rather, the first light beam's 120 first and second sides 182a, 182b produce an image of two dots of light, at least one of which is shifted along the x-axis to the right, relative to the location of the dot 192 of light when the object 170 is at the desired height H (at predetermined distance C). The second light beam's 150 first and second sides 184a, 184b also produce an image of two dots of light, at least one of which is shifted to the left along the x-axis, relative to the location of the dot 190 of light when the object 170 is at the desired height (at predetermined distance C). Of course, it should be understood that the dots of light in the image 300 may be positioned and shifted differently based on the positioning of the light sources 110, 140 and the angle of the first and second sides 182a, 182b, 184a, 184b of the light beams 120, 150 (see FIG. 1 a).

FIGS. 3a-3c depict another example of an image 300a, taken from above, of the light beams 120 and 150 on the top 186 of the object 170 in the detection area 130. In FIGS. 3a-3c, the light beams 120, 150 have a cross-sectional shape that appears as a line in the image 300a, based on the intersection of the first and second light beams 120, 150 and the top 186 of the object 170. For example, when viewed in the image 300a in FIG. 3a, the first light source 110 produces the first light beam 120 such that the first light beam 120 extends from point A to point B at the desired height H of the object 170 (predetermined distance C). The second light source 140 produces the second light beam 150 such that the second light beam 150 also extends from point A to point B at the predetermined distance C. At the predetermined distance C, the mid-point M1 of the first light beam 120 may be at the same location as the mid-point M2 of the second light beam 150. The first light beam 120 and the second light beam 150 may be a same length at the predetermined distance C and may entirely overlap. The mid-points M1, M2 of the first and second light beams 120, 150 may be the same as the mid-point M3 between point A and point B.

In this example, when viewed in the image 300a as in FIG. 3a, when the top 186d is at the desired height H (at predetermined distance C from the first and second light sources 110 and 140) the first light beam 120 and the second light beam 150 collinearly overlap completely and extend only from point A to point B, forming the appearance of a pattern of a single line 194 between point A and point B, without the first and second light beams 120, 150 extending beyond point A and point B. If the first light beam 120 is a first color and the second light beam 150 is a second color, the portion of the pattern where the light beams 120, 150 overlap each other may appear to be a third color, which is a combination of the first and second colors. Likewise, if the first light beam 120 has a first light sub-pattern and the second light beam 150 has a second light sub-pattern, the portion of the pattern where the light beams 120, 150 overlap each other may appear to have a third light sub-pattern, which is a combination of the first and second light sub-patterns.

At distances other than the desired height H (predetermined distance C), the pattern of the first and second light beams 120, 150 may appear to be different. For example, the first and second light beams 120, 150 may appear to be displaced along the x-axis, relative to the location when the height of object 170 is at the desired height H (at predetermined distance C from the light sources 110 and 140), and may appear to be a different length, not appearing to extend only between point A and point B. At distances other than the desired height H (predetermined distance C), the mid-point M1 of the first light beam 120 would not be at the same location as the mid-point M2 of the second light beam 150. Additionally, in this example, the mid-point M1 of the first light beam 120 and the mid-point M2 of the second light beam 150 may not be the same as the mid-point M3 between point A and point B.

For example, FIG. 3b is a schematic diagram of the image 300a when the top 186a of the object 170 is at the distance D, that is, where the object 170 is taller than the desired height H. In FIG. 3b, the first and second light beams 120, 150 do not extend from point A to point B as shown in FIG. 3a. The first and second light beams 120, 150 may partially collinearly overlap forming the appearance of a pattern of a line 194a. However, the mid-point M1 of the first light beam 120 is at a different location than the mid-point M2 of the second light beam 150. In this example, the mid-point M1 of the first light beam 120 is to the left of the mid-point M3 between point A and point B and the mid-point M2 of the second light beam 150 is to the right of the mid-point M3 between point A and point B. The portions of the first and second light beams 120, 150 that collinearly overlap at distance D from the first light source 110 and the second light source 140 are shorter than the portions of the first and second light beams 120, 150 that overlap when the top 186d of the object 170 is at the predetermined distance C. Again, if the first light beam 120 is a first color and the second light beam 150 is a second color, the overlap may appear as a third color that may be a combination of the first and second colors.

In another example, FIG. 3c is a schematic of image 300a when the top 186b of the object 170 is located at distance E from the first light source 110 and the second light source 140, that is, where the object 170 is shorter than the desired height H. In FIG. 3c, the first and second light beams 120, 150 extend beyond the distance from point A to point B forming the appearance of a pattern of a line 194b. The first and second light beams 120, 150 partially collinearly overlap between point A and point B but extend beyond point A and point B. The mid-point M1 of the first light beam 120 and the mid-point M2 of the second light beam 150 and the mid-point M3 between point A and point B are at different locations from each other. In this example, the mid-point M1 of the first light beam 120 is to the right of the mid-point M3 between point A and point B, and the mid-point M2 of the second light beam 150 is to the left of the mid-point M3 between point A and point B. The portions of the first and second light beams 120, 150 that collinearly overlap when the top 186b of the object 170 is located at distance E are similar to the overlap produced at the predetermined distance C; however, the combination of the first and second light beams 120, 150 appear to have a longer length, extending beyond points A and B when the top 186b of the object 170 is located at the distance E.

As can be seen from the previous examples, the pattern formed by the position and/or appearance of the first and second light beams 120, 150 in the images 300/300a may be dependent on the height/thickness of the object 170 in the detection area 130. A change in the height/thickness of the object 170 in the detection area 130 and within the light beam(s) 120, 150 (i.e. a change in the distance from the first and second light sources 110, 140) may change the amount of the light beams 120, 150 that overlap; the length of the light beams 120, 150 when viewed from above; and the location of points in the light beams 120, 150 that are shown in the images 300, 300a. The location of the mid-points M1, M2 of the light beams 120, 150 may change along the "x" axis, when viewed from above, as illustrated in FIGS. 2a-2c and 3a-3c.

Of course, it should be understood that the amount of collinear overlap of the first light beam 120 and the second light beam 150 when the top 186d of the object 170 is at the predetermined distance C may be any amount of overlap or alignment that is predetermined and known such that the amount or lack in the overlap and/or alignment may be detected by analyzing image raster content of the images 300, and 300a, for example. In one embodiment, the first and second light beams 120, 150 do not overlap when the top 186d of the object 170 is located at the predetermined distance C. Additionally, the first light beam 120 and the second light beam 150 may be different known lengths.

Returning now to FIG. 1a, the at least one light source controller 155 may control the operation of the first light source 110 and/or the second light source 140. The light source controller 155 may control the alignment, distance, angle, color/wavelength, pattern, timing and/or other attributes of the light source(s) 110, 140. Further, it should be noted that the light source controller 155 may be separate from or part of the image processing system 160. For example, the light source controller 155 may be part of the one or more processors 164, or may be separate from the image processing system 160.

FIG. 1a also shows a schematic diagram of an exemplary image processing system 160 in accordance with the present disclosure. As previously discussed, the image processing system 160 may include one or more light detectors 162a-162n and one or more processors 164.

Any light detector 162 capable of detecting a light beam, such as the first light beam 120 and/or the second light beam 150 may be used. One example of the light detector 162 is a camera based upon charge coupled device technology (known in the art as a "CCD") that includes a plurality of separate detector units arranged in a matrix format. In another example, the light detector 162 includes a digital camera based upon complementary metal-oxide semiconductor (CMOS) device technology. The imaging camera produces a file indicative of the appearance of one or more patterns created by the first and/or second light beams 120 and 150 on the top 186 of the object 170. The light detector 162 may be adapted to remotely sense the first light beam 120 and the second light beam 150, including the appearance of one or more pattern created by the first and/or second light beams 120, 150 on the top 186 of the object 170. For example, the appearance of one or more pattern created by the first and/or second light beams 120 and 150 may include a pattern of overlap of the first light beam 120 and the second light beam 150.

The light detector 162 may be adapted to sense light that is within or outside of the range visible to humans, for example, ultra-violet (UV) or infrared (IR) spectrum light. One application of a light detector 162 adapted to sense light that is not discernible to the human eye may be for inspection of objects that become transparent in light visible to the human eye but opaque in UV or IR light.

The light detector 162 may generate an output signal 166 indicative of one or more patterns produced on the top 186 of the object 170 by the first light beam 120 and the second light beam 150. The output signal 166 may be indicative of the one or more patterns based on light beam attributes such as the location of the light beams 120, 150; the length of the light beams 120, 150 when viewed from above; the color of the light beams 120, 150; the combination of color of the light beams 120, 150; the light sub-pattern of the light beams 120, 150; the frequency of the light beams 120, 150; points in the light beams 120, 150; or any combination of light beam attributes and/or patterns. The output signal 166 may include an image file as well as positional locations in pixels, dimensional measurements (for example, by translating pixel location differences to length), Red-Green-Blue (RGB) color evaluation, value(s) for the quality of a match to a pattern (for example percentage similarity to an ideal straight line), and/or other data options depending upon the equipment manufacturer. RGB color is commonly scaled from dark (R0, G0, B0) to bright white (R25, G255, B255). The image processing system 160 and/or light detector 162 can discern separate elements, such as separate colors in a combination of colors, from multiple light beams 120, 150. For example, if the first light beam 120 is red (R) and the second light beam is green (G) and the first light beam 120 and the second light beam 150 partially overlap, the image processing system 160 could discern that part of the pattern is only red light (for example, R200 with no green or blue components), that part of the pattern is only green light (for example, G200 with no red and no blue components), and that part of the pattern (the overlap) has a composition of red and green light (for example, R200, G200, with no blue components).

The one or more processor 164 may be a computer or portion of a computer. The one or more processor 164 may run computer executable instructions that, when executed by the one or more processor 164, causes the one or more processor 164 to receive the output signal 166 from the one or more light detector 162 and determine height of the top 186 of the object 170 by analyzing a location of the first light beam 120 relative to the second light beam 150 in the one or more pattern. The analysis of the location of the first light beam 120 relative to the second light beam 150 may be based on one or more of the light beam attributes, such as the location of one or more points in the first and second light beams 120, 150, for example, the mid-point M1 of the first light beam 120 and the mid-point M2 of the second light beam 150. Of course it should be understood that heights of the object 170 other than the height to the top 186 of the object 170 may be analyzed in a similar manner by aligning the first and second light beams 120, and 150 at any desired height H.

The image processing system 160 may use the relationship between the known/predetermined pattern(s) of the first and second light beams 120, 150 when the top 186 of a first object 170 is at the desired height H with the actual pattern to calculate an actual height of a second object 170.

In one embodiment, the image processing system 160 may be a camera based machine vision optical metrology system. Examples of camera based machine vision optical metrology systems, also referred to as "machine vision" systems, include Cognex Vision System and Keyence Vision System. Machine vision systems typically operate in two dimensions. Machine vision systems can be programmed to search for and recognize specific patterns and distinctions of objects 170 in the detection area 130. For example, the machine vision system may be programmed to search for a pattern which matches a straight line of a predetermined length, light sub-pattern, and/or color/wavelength. Generally, the machine vision system can produce values indicative of how closely a detected feature of the object 170 matches the desired pattern and values indicative of the location of the detected feature of the object 170. In the situation in which a straight line of a specific length and/or attribute (such as color/wavelength or light sub-pattern) is the desired pattern, the machine vision system may be programed to report values indicative of how well two or more collinear lines match the desired straight line pattern, singularly and/or in combination.

As applied in conjunction with the present disclosure, the machine vision system may determine the height of the top 186 of the object 170 in the detection area 130 by analyzing the pattern of the light beams 120, 150, (for example, the difference between the desired pattern of a straight line and the actual pattern made by the light beams 120, 150); and/or by analyzing other light beam attribute differences between the desired pattern and the actual light beams 120, 150. Determining height/thickness based on pattern of light beams 120, 150 expands the ability of the machine vision system from measurements in two dimensions to measurements in three dimensions.

In one embodiment, the first light source 110 and the second light source 140 may be adapted to produce the first light beam 120 and the second light beam 150 in an alternating sequence. The light source controller 155 may control the first and/or second light source 110, 140 to produce the alternating sequence of the first light beam 120 and the second light beam 150 and also output signals to the one or more processor 164 to synchronize the alternating sequence with the capturing and analysis of a sequence of images. For example, the one or more processor 164 may cause the image processing system 160 to receive a first input from the light detector 162, such as a camera, when the first light beam 120 is present on the object 170, and to receive a second input from the light detector 162 when the second light beam 150 is present on the object 170. The image processing system 160 may then analyze the first and second inputs to calculate a height of the top 186 of the object 170 relative to the inspection base 180. In this embodiment, the first light beam 120 and second light beam 150 may have a same color and/or pattern yet be individually identifiable based upon the synchronization between the light source controller 155 and the image processing system 160.

In one embodiment, the first light beam 120 may have a first sub-pattern and the second light beam 150 may have a second sub-pattern. The first sub-pattern may be different from the second sub-pattern. The one or more processor 164 may execute computer executable instructions that cause the one or more processor 164 to determine height/thickness of the object 170 within the light beam 120, 150 by analyzing a location of the first light beam 120 relative to the second light beam 150 in the one or more pattern, and further based at least in part on the sub-patterns of the light beams 120, 150.

In one embodiment in which the first light beam 120 may be a first color and the second light beam 150 may be a second color (i.e. the first light beam 120 having a first wavelength and the second light beam 150 having a second wavelength), the image processing system 160 may have multiple light detectors 162a-162n as shown in FIG. 1a. For example, the image processing system 160 may have a first light detector 162a, for example in the form of a first camera, adapted to remotely sense the first light beam 120, and having sensitivity to a first predetermined range of light wavelengths not including the second light beam wavelength, for example, by utilizing a first color filter. The first color filter may suppress sensing of the second light beam 150 by the first light detector 162a. The first light detector 162a may be adapted to generate a first output signal 166a indicative of one or more patterns produced on the top 186 of the object 170 by the first light beam 120. The image processing system 160 may have a second light detector 162b, for example, in the form of a second camera, adapted to remotely sense the second light beam 150, and having sensitivity to a second predetermined range of light wavelengths not including the first light beam wavelength, for example, by utilizing a second color filter to suppress sensing of the first light beam 120 by the second light detector 162b. The second light detector 162b may be adapted to generate a second output signal 166b indicative of one or more patterns produced on the top 186 of the object 170 by the second light beam 150. The one or more processor 164 may receive the first and second output signals 166a, 166b and the one or more processor 164 may execute computer executable instructions that cause the one or more processor 164 to determine height/thickness of the top 186 of the object 170 relative to the inspection base 180 within the light beams 120, 150 by analyzing a location of the first light beam 120 relative to the second light beam 150 in the one or more pattern. Of course, it should be understood that more than two light detectors 162a...162n may be used or that a single light detector 162 with multiple sensitivity, such as multiple filters, may be used. Additionally, it should be understood that the first and second light detectors 162a, 162b may be computer controlled digital cameras which may be programed to disregard one or more light signal (such as Red, Green, or Blue) rather than utilize filters. Further, it should be understood that light detectors 162 with particular sensitivities may be used rather than filters. For example, the first light detector 162a may be a color camera that is insensitive to infrared light and the second light detector 162b may a black-and-white camera with sensitivity to infrared light. In such an instance, a filter may be used with the black-and-white camera to block a particular type of light (for example, Blue) while allowing detection of infrared light, while the color camera, insensitive to infrared light, may be unfiltered and used to detect Blue light.

In one embodiment, the first light beam 120 may be a first polarization and the second light beam 150 may be a second polarization. The image processing system 160a may also include a first light detector 162a, such as a camera, adapted to remotely sense the first light beam 120, and having a first polarized filter with the first polarization orientation adapted to pass the first light beam 120 to the first light detector 162a, while suppressing the differently polarized light beam 150. The first light detector 162a may be adapted to generate a first output signal 166a indicative of one or more patterns produced on the top 186 of the object 170 by the first light beam 120. The image processing system 160 may have a second light detector 162b, such as a camera, adapted to remotely sense the second light beam 150, and having a second polarized filter with the second polarization orientation adapted to pass the second light beam 150 to the second light detector 162b, while suppressing the differently polarized light beam 120. The second light detector 162b may be adapted to generate a second output signal 166b indicative of one or more patterns produced on the top 186 of the object 170 by the second light beam 150. The one or more processor 164 may receive the first and second output signals 166a, 166b and the one or more processor 164 may execute computer executable instructions that cause the processor 164 to determine height of the top 186 of the object 170 relative to the inspection base 180 at least in part by analyzing the pattern formed by the first light beam 120 relative to the second light beam 150 in the one or more pattern. Of course, it should be understood that more than two light detectors 162a...162n may be used.

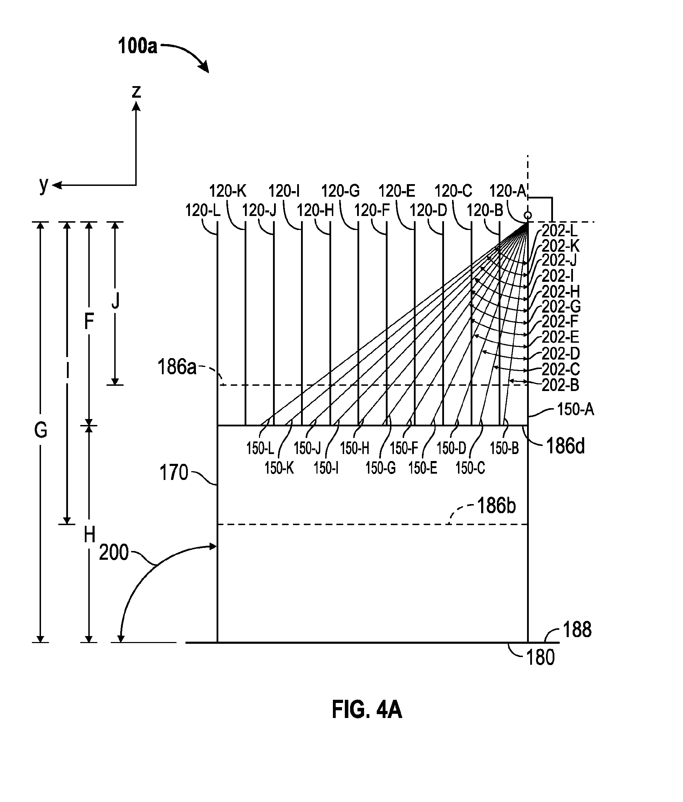

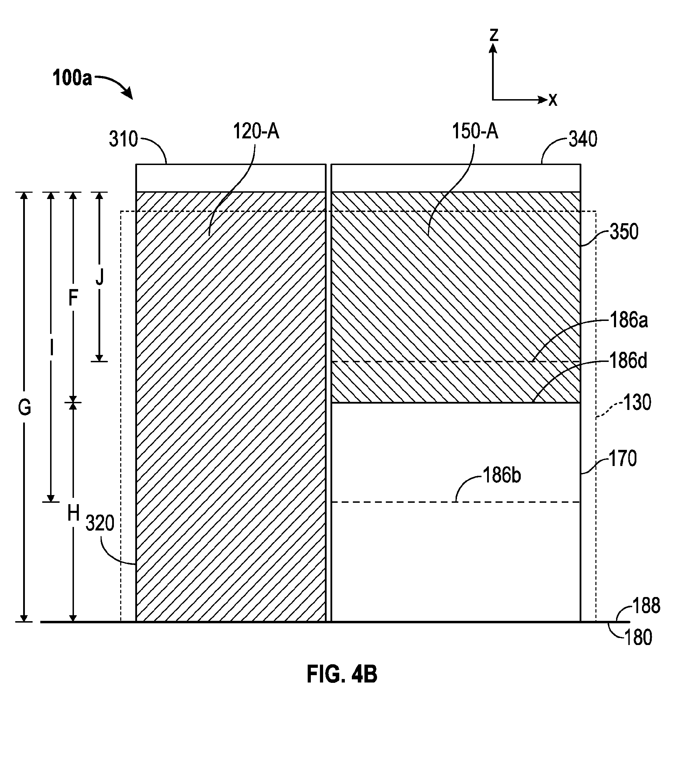

In one embodiment, the exemplary measurement system 100a may include a first light source 310 producing a first light curtain 320, a second light source 340 producing a second light curtain 350 into the detection area 130, at least one light source controller 155, and at least one image processing system 160. The first light curtain 320 may be produced into the detection area 130 and/or adjacent to the detection area 130. FIG. 4a is a schematic diagram of a side view of a portion of the exemplary measurement system 100a including the first light curtain 320 and second light curtain 350. FIG. 4b is a front view of the exemplary measurement system 100a of FIG. 4a, depicting the curtains of light beams as if the light beams were visible, such as if the beams were illuminated through smoke. The image processing system 160 and light source controller 155 are as depicted in FIG. 1 a.

The first and second light curtains 320, 350 may be produced by any suitable light source 310, 340. The second light source 340 may be spaced a distance from the first light source 310. As previously discussed, examples of light sources 310, 340 include lasers, light emitting diodes (LEDs), and LED pattern projectors. Of course, it should be understood that more than one light source 310, 340 may be used to produce one or more light curtain 320, 350 and/or light beams 120, 150. The plurality of first and second light beams 120, 150 may have the attributes previously described for the first and second light beams 120, 150.

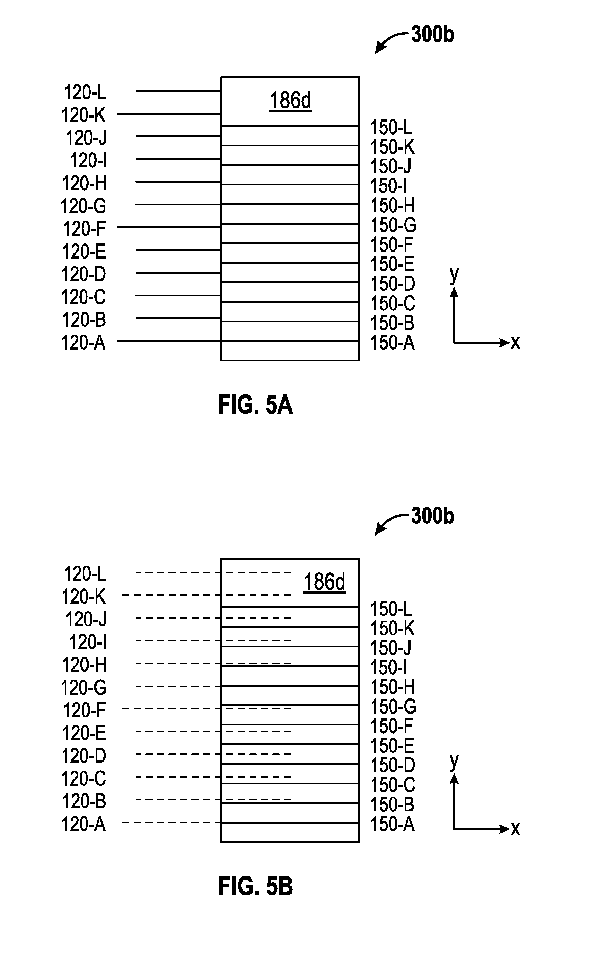

As shown in FIG. 4b, the first light curtain 320 may be projected such that the plurality of spaced apart first light beams are projected not to intersect the object 170. In one embodiment, the first light curtain 320 may be projected to intersect the object 170, partially or completely, as will be further described in conjunction with FIG. 5b.

As illustrated in FIG. 4a, the first light curtain 320 may have a plurality of spaced apart first light beams 120 along the "y" axis. For exemplary purposes, FIG. 4a depicts first light beams 120-A, 120-B, 120-C, 120-D, 120-E, 120-F, 120-G, 120-H, 120-I, 120-J, 120-K, and 120-L. The second light curtain 350 may have a plurality of spaced apart second light beams 150 along the "y" axis, for example, 150-A, 150-B, 150-C, 150-D, 150-E, 150-F, 150-G, 150-H, 150-I, 150-J, 150-K, and 150-L. It should be understood that a greater number or lesser number of light beams may be used.

The plurality of first light beams 120 may have the same spacing or different spacing than the plurality of second light beams 150. Additionally, the plurality of first light beams 120 may be parallel to each other or may be in a fan-like pattern. The plurality of second light beams 150 may be parallel to each other or may be in a fan-like pattern. The plurality of first light beams 120 may be produced at a first angle 200 or set of angles 200 relative to the surface 188 of the inspection base 180. The plurality of second light beams 150 may be produced at a second angle 202 or set of angles 202A-202L relative to the surface 188 of the inspection base 180. The first and second angles 200, 202 may be different from one another. Angles may also differ within a set of angles, such as the exemplary set of angles 202A-202L depicted in FIG. 4a. The first and second light beams 120, 150 may be perpendicular to the surface 188 of the inspection base 180 or at a non-perpendicular angle to the inspection base 180, or a combination thereof. The first light beams 120 may be aimed to intersect the object 170 in part or wholly, or the first light beams may be aimed not to intersect the object 170. The second light beams 150 may be aimed to intersect the object 170 in part or wholly.

First light beams 120 and second light beams 150 may be predetermined to be aimed or aligned to intersect each other, or appear to intersect each other, at a predetermined distance above the inspection base 180, when viewed from the side as in FIG. 4a. The same first and second light beams 120, 150 that appear to intersect each other from a side view may appear to produce a pattern where the light beams align with each other at the predetermined distance when viewed from above. The predetermined distance may be at a desired height H of the object 170 in the detection area 130 from the inspection base 180, and may be measured or represented as a predetermined distance F from the first and second light sources 310, 340, where the sum of the desired height H and the predetermined distance F is a distance G from the first and second light sources 310, 340 to the inspection base 180, as illustrated in FIG. 4b. The first light beams 120 may be projected such that one or more first light beams 120 align and/or overlap with one or more second light beams 150, when viewed from above, when the first light beams 120 are projected to the surface 188 of the inspection base 180 or when the first light beams are projected the predetermined distance F to the top 186d of the object 170, for example.

In general, as the height of the object 170 changes from the desired height H, first and second light beams 120, 150 that are at a non-normal angle (i.e. an angle other than ninety degrees) to the inspection base 180 may appear to change location along the "y" axis, when viewed from above, as the top 186 of the object 170 intersects the non-normal angled first and/or second light beams 120, 150 at a different distance from the inspection base 180 and, correspondingly, at a different distance from the light source(s) 310, 340 along the angled light beams 120 and/or 150, thus causing the light beams 120 and/or 150 to produce different patterns on the top 186 of the object 170 relative to the pattern(s) produced at the desired height H (i.e. at predetermined distance F from light sources 310, 340).

In exemplary FIGS. 4a-4b, the first light curtain 320 produces the plurality of spaced apart first light beams 120 parallel to one another and projected to a predetermined distance G and aimed so as not to intersect the object 170. Predetermined distance G in this example is beyond the predetermined distance F to the surface 188 of the inspection base 180 of the detection area 130. In this example, the second light curtain 350 produces the plurality of second light beams 150 in a fan-like pattern and projected to predetermined distance F (the desired height H of the object 170) and aimed to intersect the object 170. The plurality of second light beams 150 in a fan-like pattern may have one light beam, for example, 150-A, perpendicular to the surface 188 of the inspection base 180, while other light beams, for example, 150-B through 150-L, may be at one or more non-normal angles 202a-202I to the surface 188 of the inspection base 180 and to the first light beams 120. Therefore, as the height of the top 186 of the object 170 changes, the second light beams 150 may appear to change location along the "y" axis when viewed from above, as the top 186 intersects the second light beams 150 at different points along the angled second light beams 150 lengths. In contrast, in this example the angle 200 between the plurality of first light beams 120 and the inspection base 180 is ninety degrees. Therefore, as the height of the top 186 of the object 170 changes, the first light beams 120 may not appear to change location when viewed from above. The static appearance of the location of the first light beams 120 may be used as a reference relative to the changing location of the second light beams 150. Of course, as previously described, the first light beams 120 may also be at one or more non-normal angles 202 and/or in a fan-like pattern, in which case the overall changes in the pattern formed by the first and second light beams 120, 150 may be used.

The light source controller 155 and image processing system 160 are as previously described. The image processing system 160 may be a machine vision system. The one or more light detectors 162a-162n, such as one or more cameras, may remotely sense the first and second light beams 120, 150 and generate one or more output signal 166 indicative of one or more patterns produced by the first and second light beams 120, 150, where at least one of the first and second light beams 120, 150 is aimed to produce one or more patterns at least partially to the top 186 of the object 170.

The one or more processor 164 may run computer executable instructions that, when executed by the one or more processor 164, cause the one or more processor 164 to receive the one or more output signal 166 from the one or more light detector 162a-162n and determine height/thickness of the object 170 based on analysis of location of the first light beam(s) 120 relative to the second light beam(s) 150 in the one or more pattern.

Patterns may include the appearance of straight "unbroken" lines and "broken" lines based on the alignment or lack of alignment of one or more of the first and second light beams 120, 150 when viewed from above. Of course, it should be understood that any predetermined pattern may be used. For example, though FIG. 4b depicts light beams 120 as projected so as not to intersect object 170, in one embodiment, the first and second light beams 120, 150 may both be projected in part or entirely to intersect the top 186 of the object 170. Then the pattern may include overlapping light beams 120, 150, when viewed from above, as will be further described in respect to FIG. 5b.

The image processing system 160 may calculate the amount of collinear alignment (or lack of alignment) of the first and second light beams 120, 150, i.e. how close one of the first light beams 120 and one of the second light beams 150 are to forming a continuous straight line in appearance when viewed from above. The amount may be quantified. The amount may be detected by the image processing system 160, such as a machine vision system. In cases of inexact collinear alignment, the image processing system 160 may be used to select the best occurrence of collinear alignment. In case of two equally inexact collinear alignments of light beams, the image processing system may select the best compromise, such as the simple average of the result that would be determined if either pair alone were best at achieving collinearity.

FIG. 5a depicts a schematic diagram of exemplary image 300b, captured by the exemplary measurement system 100a of FIGS. 4a-4b, of multiple second light beams 150 on the top 186 of the object 170 and the first light beams on the top 188 of the inspection base 180 when the top 186d of the object 170 is at the desired height H (i.e. at predetermined distance F from the first and second light sources 310, 340). At least one of the first light beams 120 may be produced to align collinearly with at least one of the second light beams 150 at the predetermined distance F from the first and second light sources 310, 340. The first light beams 120 may be the same length as the second light beams 150 or a different length than the second light beams 150 at a predetermined distance. In one embodiment, the first light beams 120 may be of more than one length as to form a measurement-scale-like appearance, for example, as shown in FIGS. 5a-5d. This allows utilization of the relationship of the first light beams 120 to the second light beams 150 for a vernier scale-type measurement tool.

In this example, the plurality of first and second light beams 120, 150 in the first and second light curtains 320, 350 are projected from the first and second light sources 310, 340 such that, when the first light beams 120-A through 120-L are projected to the predetermined distance G (here, the surface 188 of the inspection base 180 of the detection area 130) and the second light beams 150-A through 150-L are projected to the predetermined distance F, then (1) the first light beam 120-A and the second light beam 150-A collinearly align forming a pattern with the appearance of a straight "unbroken" line when viewed from above and (2) the first light beam 120-G and the second light beam 150-H collinearly align forming a pattern with the appearance of a straight "unbroken" line when viewed from above, and (3) the remainder of the first light beams (120-B, 120-C, 120-D, 120-E, 120-F, 120-H, 120-I, 120-J, 120-K, and 120-L) and second light beams (150-B, 150-C, 150-D, 150-E, 150-F, 150-G, 150-I, 150-J, 150-K, and 150-L) do not collinearly align, forming a pattern with the appearance of broken lines, as illustrated in FIG. 5a. It should be understood that any number of first light beams 120 and second light beams 150 may be predetermined to collinearly align at predetermined distance F.

FIG. 5b depicts a schematic diagram of exemplary image 300b, similar to the image of FIG. 5a, but where the first light curtain's 320 plurality of first light beams 120 and the second light curtain's 350 plurality of second light beams 150 are both projected to extend to intersect the object 170. As can be seen from FIG. 5b, the intersection of the object 170 and the plurality of first light beams 120 produces patterns of overlapping light beams 120, 150 on the surface 186d of the object 170, when viewed from above, such as (1) the first light beam 120-A and the second light beam 150-A collinearly aligning and overlapping forming a pattern with the appearance of a straight "unbroken" line when viewed from above and (2) the first light beam 120-G and the second light beam 150-H collinearly aligning and overlapping forming a pattern with the appearance of a straight "unbroken" line when viewed from above. For purposes of clarity, the plurality of first light beams 120 in FIG. 5b are shown as dotted lines.

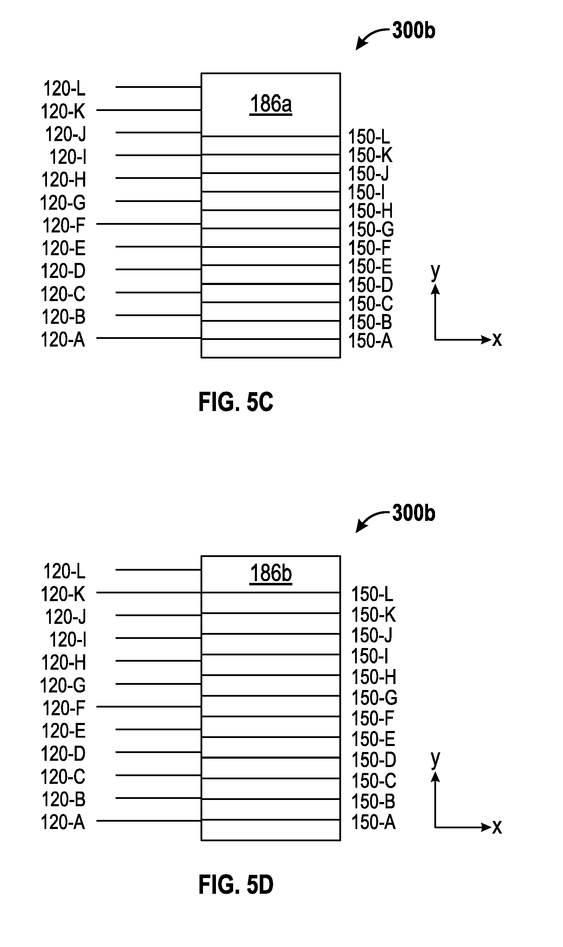

As previously discussed, in general, a change in the distance from the second light source 340 to the top 186 of the object 170 (i.e. a change in the height of the object 170) changes the location of the second light beam 150 in the "y" direction, as illustrated in FIGS. 5c-5d. This may produce pattern(s) with the appearance of "broken" lines in image 300b by the first and second light beams 120, 150 that appeared as straight "unbroken" lines at the predetermined distance F.

FIG. 5c is a schematic diagram of the image 300b, captured by the exemplary measurement system 100a of FIGS. 4a-4b, when the top 186a of the object 170 is at the distance J. When the distance J to the second light source 340 is less than predetermined distance F, such as when the top 186 of the object 170 is at a greater height than the desired height H, then the second light beams 150 may appear to be shifted in the negative "y" direction, as illustrated in FIG. 5c. In this example, the object 170 has a greater height than the desired height H, and the first light beam 120-G no longer aligns with the second light beam 150-H and different patterns may be formed. For example, in FIG. 5c, the first light beam 120-I aligns with the second light beam 150-K forming a pattern with the appearance of a straight line when viewed from above.

FIG. 5d is a schematic diagram of the image 300b, captured by the exemplary measurement system 100a of FIGS. 4a-4b, when the top 186b of the object 170 is at the distance I. When the distance I to the second light source 340 is more than the predetermined distance F, such as when the top 186b of the object 170 is at a lesser height than the desired height H, then the second light beams 150 may appear to be shifted in the positive "y" direction, as illustrated in FIG. 5d. In this example, the first light beam 120-G again no longer aligns with the second light beam 150-H and different patterns may be formed. For example, in FIG. 5d the first light beam 120-K aligns with the second light beam 150-L forming a pattern of a straight line when viewed from above. Note that the displacement of alignment of the light beams 120, 150 when the object 170 is a lesser height than the desired height H is in the opposite direction of the displacement of alignment of the light beams 120, 150 when the object 170 is at a greater height than the desired height H.

By knowing the predetermined angle, line spacing, and/or distance from the first and second light sources 310, 340, the second light beams 150 can be analyzed in relation to the first light beams 120 to determine height/thickness of the object 170 in the detection area 130. The analysis may include analysis of how close, quantitatively and/or qualitatively, the first light beam 120-J and the second light beam 150-K are to matching a predetermined pattern, such as forming the appearance of a single straight line. The placement of the first and second light beams 120, 150 at the predetermined distance can allow the one or more processor 164 to compare an actual pattern, (such as displacement of alignment of the light beams 120, 150 and/or "broken" lines patterns) to the expected pattern (for example, the alignment of one or more first light beams 120 and second light beams 150 to produce the appearance of single "unbroken" lines) and determine height of the object 170 within the second light curtain 350.

Of course, it should be understood that the predetermined distance G could be the same as the predetermined distance F. That is, the first light beams 120 could be projected the same distance as the second light beams 150. In other words, the first light beams 120 would align with the second light beams 150 (when viewed from above) when the first light beams 120 are projected to predetermined distance F rather than when the first light beams 120 are projected to predetermined distance G. However, the larger the difference between the predetermined distance G and the predetermined distance F (i.e. the projection distance of the first light beams 120 and the second light beams 150), the more displacement of alignment (when viewed from above) between first light beams 120 and second light beams 150 is produced when the top 186 of the object 170 is not at the predetermined distance F (that is, not at the desired height H).

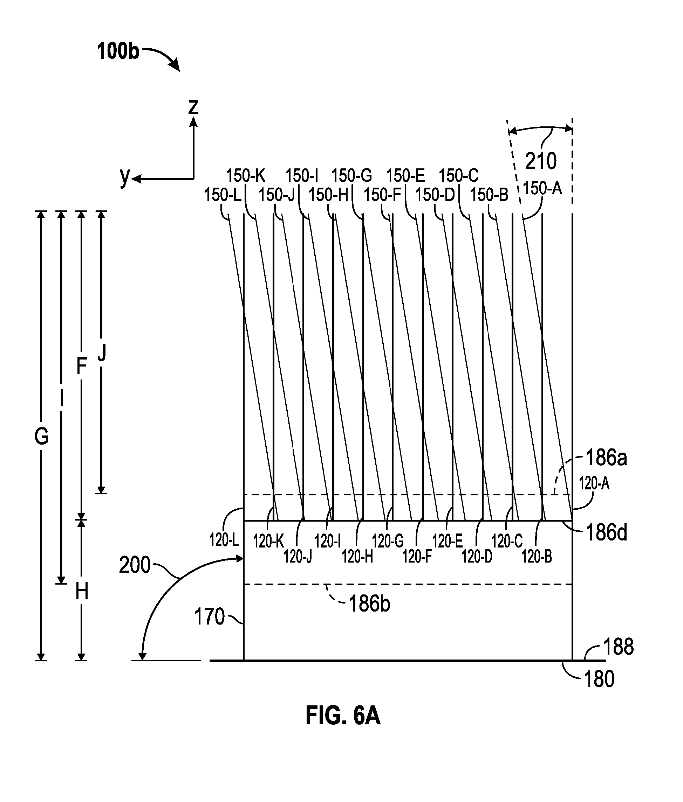

FIG. 6a is a schematic diagram of a side view of an exemplary measurement system 100b similar to the measurement system 100a of FIG. 4b but having second light beams 150 parallel to one another and with a different spacing than the first light beams 120. In this example, the plurality of spaced apart second light beams 150 are parallel to each other (rather than in a fan-like pattern), but at an angle 210 relative to the first light beams 120. The second light beams 150 may have a different spacing between the spaced apart second light beams 150 than the spacing between the spaced apart first light beams 120.

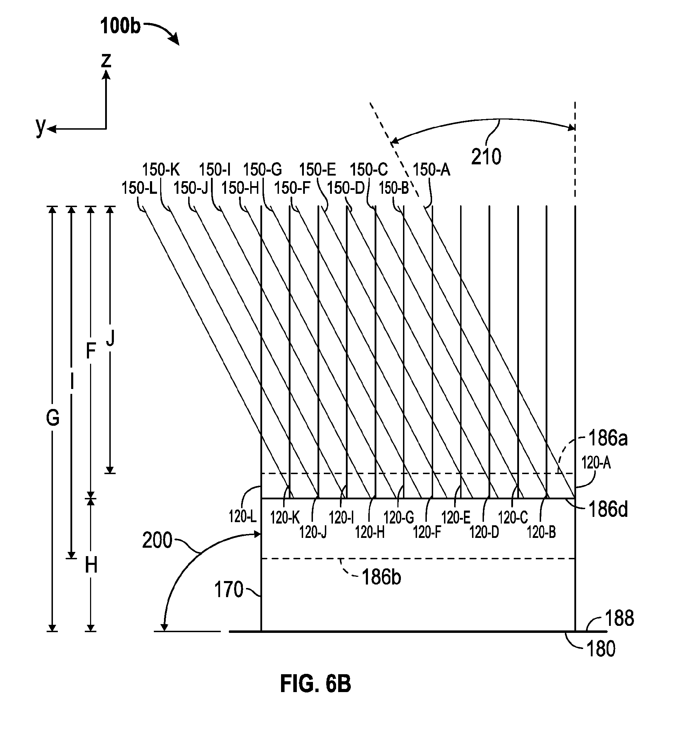

The angle 210 between the first light beams 120 and the second light beams 150 is shown as approximately ten degrees in FIG. 6a. Increasing the angle 210 between the first light beams 120 and the second light beams 150 creates smaller separation between the intersection points of the light beams 120, 150, allowing finer discrimination of height of the object 170 within the second light curtain 350. Any angle 210 may be used, so long as there is the ability to discriminate between first light beams 120 and second light beams 150. For example, FIG. 6b is a schematic diagram of the exemplary measurement system 100b of FIG. 6a but with an angle 210 of approximately twenty degrees between the first light beams 120 and the second light beams 150. In this example, the angle 200 of the first light beams 120 is perpendicular to the inspection base top surface 188.

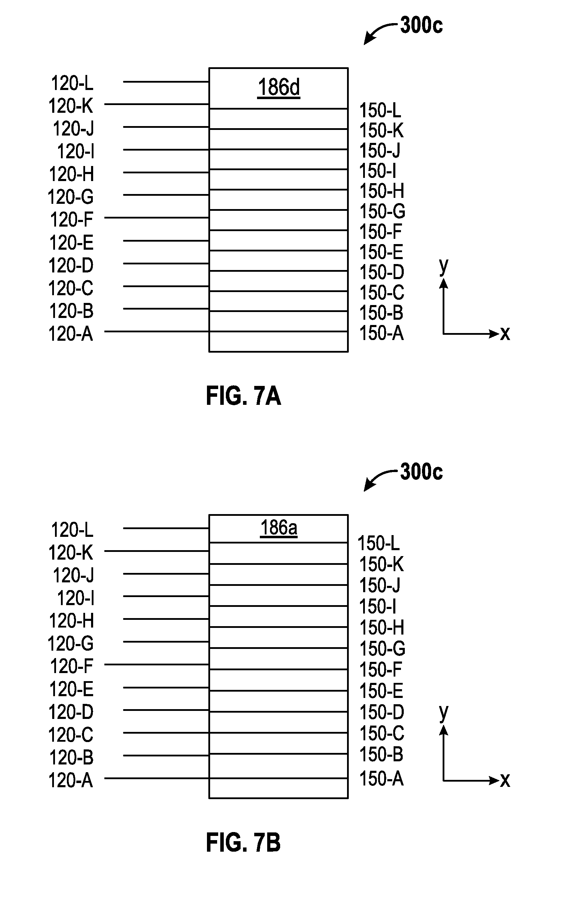

In the example illustrated in FIG. 6a, the first light beam 120-A and the second light beam 150-A are projected from the first and second light sources 310, 340 such that, when the first light beams 120-A through 120-L are projected to the predetermined distance G (here, the surface 188 of the inspection base 180) and the second light beams 150-A through 150-L are projected to the desired height H of the object (e.g. to predetermined distance F), then (1) the first light beam 120-A and the second light beam 150-A collinearly align when viewed from above and (2) the first light beam 120-J and the second light beam 150-K collinearly align when viewed from above, and (3) the remainder of the first light beams 120 and second light beams 150 do not collinearly align when viewed from above, as shown in FIG. 7a.

FIG. 7a is a schematic diagram of an image 300c, captured by the exemplary measurement system 100b of FIG. 6a, of the second light beams 150 on the top 186d of the object 170 at the desired height H (predetermined distance F) and the first light beams 120 on the top surface 188 or the inspection base 180. In this example, the first and second light beams 120, 150 are aimed such that when the top 186d of the object 170 is at the desired height H (predetermined distance F), then the first light beam 120-A and the second light beam 150-A align, forming a pattern with the appearance of an unbroken straight line, and the first light beam 120-J and the second light beam 150-K collinearly align, also forming a pattern with the appearance of an unbroken straight line. Additionally, the remaining first light beams 120-B, 120-C, 120-D, 120-E, 120-F, 120-G, 120-H, 120-I, 120-K, and 120-L may be produced such that they purposefully do not align with the remaining second light beams 150-B, 150-C, 150-D, 150-E, 150-F, 150-G, 150-H, 150-I, 150-J, and 150-L, at the predetermined distance F. It should be understood that any number of first light beams 120 and second light beams 150 may be predetermined to collinearly align at the predetermined distance F.

FIG. 7b is a schematic diagram of image 300c when the top 186a of the object 170 is at the distance J. When the distance J to the second light source 340 is less than predetermined distance F, such as when the top 186a of the object 170 is at a greater height than the desired height H, then the second light beams 150 may appear to be shifted in the positive "y" direction, as illustrated in FIG. 7b. In the example illustrated in FIG. 7b, the first light beam 120-J no longer aligns with the second light beam 150-K in image 300 and different patterns may be formed. For example, in FIG. 7b the first light beam 120-C aligns with the second light beam 150-C forming a pattern with the appearance of a single straight line.

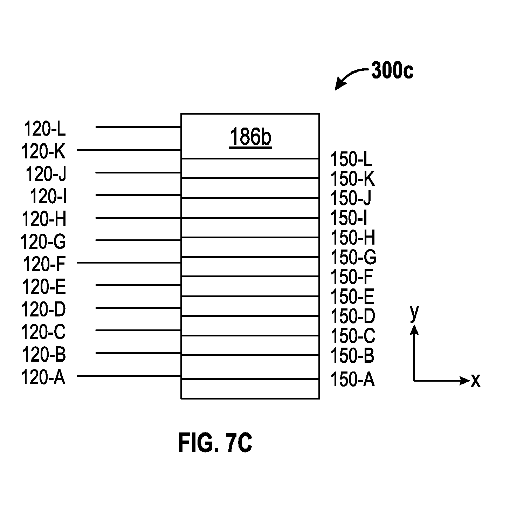

FIG. 7c is a schematic diagram of image 300c when the top 186b of the object 170 is at the distance I. When the distance I to the second light source 340 is more than predetermined distance F, such as when the top 186b of the object 170 is at a lesser height/thickness than the desired height H, then the second light beams 150 appear to be shifted in the negative "y" direction, as illustrated in FIG. 7c. In this example, again the first light beam 120-J no longer aligns with the second light beam 150-K and different patterns may be formed. For example, in FIG. 7c the first light beam 120-H aligns with the second light beam 150-I forming a pattern with the appearance of a straight line.

Note that the displacement of alignment of the light beams 120, 150 when the object 170 is a lesser height/thickness than the desired height/thickness is in the opposite direction of the displacement of alignment of the light beams 120, 150 when the object 170 is at a greater height/thickness than the desired height/thickness.

By knowing the predetermined angle, line spacing, and/or distance from the first and second light sources 310, 340, the relationship of the second light beams 150 to the first light beams 120 can be analyzed to determine height/thickness of an object 170 within the one or more of the first and/or second light beams 150 in the detection area 130. In one embodiment, the image processing system 160 may compare an actual pattern formed by the light beams 120, 150 to the expected pattern of the light beams 120, 150 to determine height/thickness of an object 170.

In one embodiment, more than one predetermined distance may be identified so that additional first light beams 120 from the first light curtain 320 align with additional second light beams 150 from the second light curtain 350 at additional predetermined distance(s).

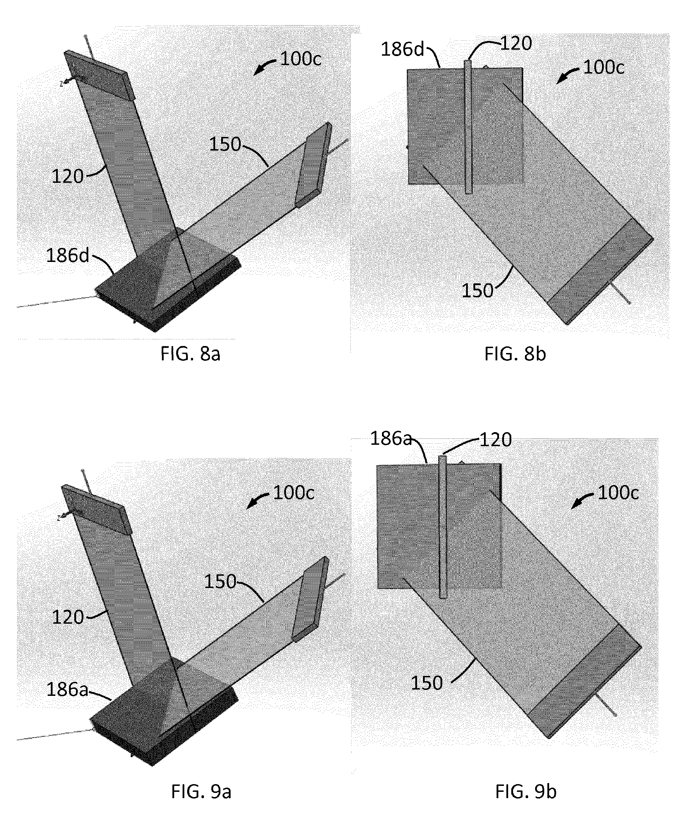

In one embodiment, the first and second light sources 110, 140 may be aimed such that the first and second light beams 120, 150 cross to form an image of a vertex on the top 186 of the object 170. For example, FIG. 8a is a schematic diagram (depicting the light beams 120, 150 as visible) of a perspective view of a portion of an exemplary measurement system 100c with first and second light beams 120, 150 aimed to cross one another. In FIG. 8a, the object top 186d is at the desired height. FIG. 8b is a top view of the system 100c of FIG. 8a. In this example, when the object top 186d is at a desired height/thickness, the vertex of the light beams 120, 150 is at a predetermined location.

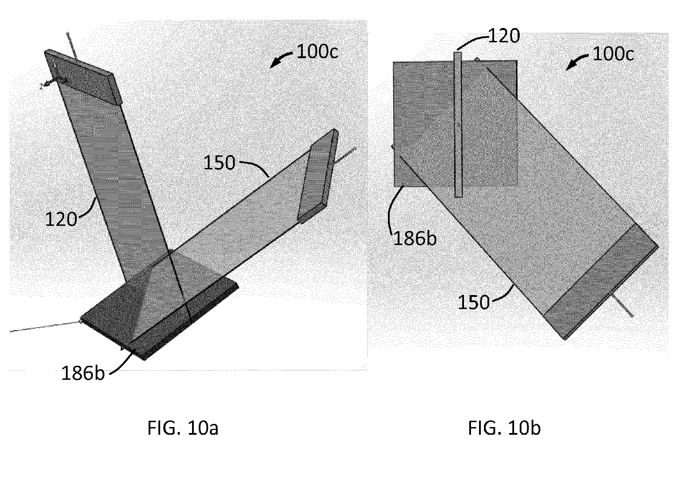

If the height/thickness of the object top 186 changes, then the location of the vertex also changes. For example, FIG. 9a is a schematic diagram of a perspective view of the exemplary measurement system 100c of FIG. 8a, with the object top 186a having more than the desired height and the vertex of the light beams 120, 150 now in a different location than when the object top 186d is at the desired height. FIG. 9b is a top view of the system 100c of FIG. 9a. In another example, FIG. 10a is a schematic diagram of a perspective view of the exemplary measurement system 100c of FIG. 8a, with an object top 186b having less than the desired height and the vertex of the light beams 120, 150 in a different location than when the object top 186d is at the desired height. FIG. 10b is a top view of the system 100c of FIG. 10a. By determining the location of the vertex, the thickness of the object top 186 can be determined based upon a known relationship between the location of the vertex and the thickness/height of the object top 186.

As previously described, the image processing system 100c may include one or more light detector 162, such as one or more camera, adapted to remotely sense at least one first light beam 120 and at least one second light beam 150 and generate an output signal 166 indicative of one or more patterns produced by at least one first light beam 120 and at least one second light beam 150, at least one light beam aimed at least in part to the top 186 of the object 170. The image processing system 100c may also include one or more processor 164 running computer executable instructions that when executed by the one or more processor 164 cause the one or more processor 164 to receive the output signal 166 and determine height of the top 186 of the object 170 by analyzing a location of at least one first light beam 120 relative to at least one second light beam 150 in the one or more pattern. For example, the location may be the location of the vertex. Of course, it should be understood that more than two light beams may be used and/or that one or more light curtains may be utilized. It should also be understood that visible and/or non-visible wavelengths of light can be used.

Determination of height/thickness of the object 170 in the detection area 130 may allow for automated corrections so that the object 170 may be moved to a desired height/thickness, and/or may allow for use in inspection systems for selection between objects 170 of a desired height/thickness and objects 170 below/above desired height/thickness. Recognition of the directional position can allow compensation of the height of the object 170. For example, for an object 170 moving through the detection area 130, a process controlling thickness of the object 170 could be modified to change the thickness based on the directional position of the light beams 120, 150. Examples of processes that could control thickness of an object 170 include pressure rollers, milling machines, planers, or slits in extruders, and so on.

### CONCLUSION

Conventionally, systems using light to measure objects are difficult to read, ambiguous, not precise, and insensitive to small displacements. The present disclosure addresses these deficiencies with a methodology and system for optical metrology through light analysis. The exemplary embodiment produces multiple light beams that are independently distinguishable into a detection area. The light beams are detected by an image processing system which determines height and/or thickness of an object within the detection area based on the location and/or appearance of the light beams. In an automated system, this can allow for automated corrections so that the target is moved to the correct height and/or the system is adjusted to correct the target thickness; and for inspection systems, this can allow for selection between too thick, too thin, and just right objects.

The foregoing description provides illustration and description, but is not intended to be exhaustive or to limit the inventive concepts to the precise form disclosed. Modifications and variations are possible in light of the above teachings or may be acquired from practice of the methodologies set forth in the present disclosure.

Even though particular combinations of features are recited in the claims and/or disclosed in the specification, these combinations are not intended to limit the disclosure. In fact, many of these features may be combined in ways not specifically recited in the claims and/or disclosed in the specification. Although each dependent claim listed below may directly depend on only one other claim, the disclosure includes each dependent claim in combination with every other claim in the claim set.

No element, act, or instruction used in the present application should be construed as critical or essential to the invention unless explicitly described as such outside of the preferred embodiment. Further, the phrase "based on" is intended to mean "based, at least in part, on" unless explicitly stated otherwise.

## Claims

1. A system, comprising:
an inspection base;
a first light source producing a first light beam into a detection area;
a second light source spaced a distance from the first light source and producing a second light beam into the detection area, the first light beam overlapping the second light beam at a predetermined distance above the inspection base, the first light beam being distinguishable from the second light beam;
at least one light source controller controlling the first light source and the second light source;
at least one image processing system comprising:
one or more light detector adapted to remotely sense the first light beam and the second light beam to generate an output signal indicative of one or more patterns produced on a top of an object by the first light beam and the second light beam; and
one or more processor running computer executable instructions that when executed by the one or more processor causes the one or more processor to:
receive the output signal; and
determine height of the top of the object by analyzing a location of the first light beam relative to the second light beam in the one or more pattern.

2. The system of claim 1, wherein the light detector is a camera.

3. The system of claim 1, wherein the image processing system is part of a camera-based machine vision optical metrology system.

4. The system of claim 1, wherein the first light beam collinearly overlaps the second light beam at the predetermined distance such that a midpoint of the first light beam is at a same location as a midpoint of the second light beam.

5. The system of claim 4, wherein the location of the first light beam relative to the second light beam is based on the location of the midpoint of the first light beam relative to the midpoint of the second light beam.

6. The system of claim 1, wherein one or more light beams are of wavelengths outside of human visible range.

7. The system of claim 1, wherein the first light beam is a first pattern and the second light beam is a second pattern.

8. The system of claim 1, wherein the first light beam is produced at a first time and the second light beam is produced at a second time and the first time and the second time are different instants of time.

9. The system of claim 1, wherein the one or more processor accesses computer executable instructions that when executed by the processor causes the one or more processor to determine height of the object within the one or more pattern further based on location of at least two points in the first light beam relative to at least two points in the second light beam.

10. The system of claim 1, wherein the first light beam is a first color and the second light beam is a second color.

11. The system of claim 10, wherein the one or more processor accesses computer executable instructions that when executed by the processor causes the one or more processor to determine height of the object within the one or more pattern based on a pattern of colors of the first and second light beams.

12. The system of claim 10, wherein the processor running computer executable instructions that when executed by the processor causes the image processing system to determine height of the object within the one or more pattern further based on color and length of at least one light beam.

13. The system of claim 1,
wherein the first light source and the second light source are adapted to produce the first light beam and the second light beam in an alternating sequence; and
wherein the processor running computer executable instructions that when executed by the processor further causes the image processing system to receive input from the light detector synchronized to the alternating sequence of the first light beam and the second light beam such that the first light beam is differentiatable from the second light beam.

14. The system of claim 1,
wherein the first light beam has a first sub-pattern and the second light beam has a second sub-pattern, wherein the first sub-pattern is different from the second sub-pattern; and
wherein the processor running computer executable instructions that when executed by the processor causes the image processing system to determine height of the object within the light beam further based at least in part on the sub-patterns of the light beams.

15. A system comprising:
a first light source producing a first light beam of a first wavelength into a detection area;
a second light source producing a second light beam of a second wavelength into the detection area; the first light beam overlapping the second light beam at a predetermined distance from the first light source and the second light source;
at least one light source controller controlling the first and second light source;
at least one image processing system comprising:
a first camera adapted to remotely sense the first light beam, and having a sensitivity to a first predetermined range of light wavelengths not including the second light beam wavelength, the first camera adapted to generate a first output signal indicative of one or more patterns produced on a top of an object by the first light beam; and
a second camera adapted to remotely sense the second light beam, and having a sensitivity to a second predetermined range of light wavelengths, the range not including the first light beam wavelength, the second camera adapted to generate a second output signal indicative of one or more patterns produced on the top of the object by the second light beam;
one or more processor running computer executable instructions that when executed by the one or more processor causes the one or more processor to:
receive the first and second output signals; and
determine height of the top of the object by analyzing a pattern formed by a location of the first light beam relative to the second light beam.

16. A system comprising:
a first light source producing a first light beam of a first polarization into a detection area;
a second light source producing a second light beam of a second polarization into the detection area; the first light beam overlapping the second light beam at a predetermined distance from the first light source and the second light source;
at least one light source controller controlling the first and second light source;
at least one image processing system comprising:
a first camera adapted to remotely sense the first light beam, and having a first polarized filter with the first polarization orientation adapted to filter the first light beam to the first camera, the first camera adapted to generate a first output signal indicative of one or more patterns produced on a top of an object by the first light beam; and
a second camera adapted to remotely sense the second light beam, and having a second polarized filter with the second polarization orientation adapted to filter the second light beam to the second camera, the second camera adapted to generate a second output signal indicative of one or more patterns produced on the top of the object by the second light beam;
one or more processor running computer executable instructions that when executed by the one or more processor causes the one or more processor to:
receive the first and second output signals; and
determine height of the top of the object by analyzing a location of the first light beam relative to the second light beam in the one or more pattern.

17. A system, comprising:
a first light source producing a first light curtain into a detection area, wherein the first light curtain comprises a plurality of spaced apart first light beams;
a second light source spaced a distance from the first light source producing a second light curtain into the detection area, wherein the second light curtain comprises a plurality of spaced apart second light beams, wherein at least one first light beam aligns with at least one second light beam at a predetermined distance from the first light source and the second light source, the first light beam being distinguishable from the second light beam;
at least one light source controller controlling the first light source and the second light source;
at least one image processing system comprising:
one or more light detector adapted to remotely sense at least one first light beam and at least one second light beam and generate an output signal indicative of one or more patterns produced by at least one first light beam and at least one second light beam, at least one light beam aimed at least in part to a top of an object; and
one or more processor running computer executable instructions that when executed by the one or more processor causes the one or more processor to:
receive the output signal; and
determine height of the top of the object by analyzing a location of at least one first light beam relative to at least one second light beam in the one or more pattern.

18. The system of claim 17, wherein the light detector is part of a camera-based machine vision optical metrology system.

19. The system of claim 17, wherein the predetermined distance is a first predetermined distance and wherein another of the first light beams from the first light curtain aligns with another of the second light beams from the second light curtain at a second predetermined distance.

20. The system of claim 17, wherein at least one of the spaced apart first light beams is produced at a first angle and at least one of the spaced apart second light beams is produced at a second angle.

21. The system of claim 17, wherein one or more light beams are of wavelengths outside of human visible range.
